# DEMANDE DE BREVET EUROPEEN

(11) **EP 0 587 487 A1**
(43) Date de publication de la demande: **16.03.1994**
(21) Numéro de dépôt: 93402163.5
(22) Date de dépôt: 06.09.1993
(51) Int. Cl.: G08G 1/16, G01S 1/68, G08B 1/08

(54) **Détecteur de chocs et balise de détresse pour aéronef, comportant un tel détecteur**

(30) Priorité: 08.09.1992 FR 9210702
(71) Demandeur: AEROSPATIALE Société Nationale Industrielle, F-75781 Paris Cédex 16 (FR)
(72) Inventeur: Dusart, Gérard, F-65320 Borderes/Echez (FR)
(74) Mandataire: Poulin, Gérard

(57) **Abrégé**

Afin que les systèmes de sécurité tels que les émetteurs d'une balise de détresse embarquée sur un aéronef puissent être déclenchés aussi bien lors d'un choc violent et très court que lors d'un choc moins violent, mais de plus longue durée, il est proposé un détecteur de chocs qui prend en compte à la fois l'amplitude et la durée d'un choc éventuel. Ce détecteur comprend un capteur électromagnétique (50) dont le bobinage délivre un signal impulsionnel ayant une amplitude et une durée proportionnelles à l'amplitude et à la durée du choc. Un intégrateur (80) permet d'obtenir un signal intégré dont l'amplitude est proportionnelle, à la fois, à l'amplitude et à la durée du choc. Un comparateur (82) permet ensuite de commander les systèmes de sécurité, si ce signal intégré franchit un seuil, de préférence réglable.

## Description

L'invention concerne un détecteur de chocs conçu pour être embarqué sur un véhicule, afin de déclencher automatiquement, en cas de choc, un ou plusieurs systèmes de sécurité associés au véhicule considéré. L'invention a aussi pour objet une balise de détresse pour aéronef, incorporant un tel détecteur de chocs.

Le détecteur de chocs selon l'invention peut être utilisé sur tous types de véhicules, qu'il s'agisse de véhicules terrestres (automobiles, autocars, trains, etc.) ou de véhicules maritimes ou aériens (avions, hélicoptères, etc.).

La nature du ou des systèmes de sécurité déclenchés par le détecteur de chocs dépend notamment de la nature du véhicule sur lequel il est embarqué. Sur les véhicules terrestres, il peut notamment s'agir de systèmes visant à protéger du choc les personnes qui se trouvent à bord du véhicule. Sur les véhicules maritimes et aériens, le détecteur de chocs commande le plus souvent l'émetteur de signaux d'unebalise de détresse facilitant le repérage et, dans certains cas, l'identification du bateau ou de l'aéronef. Lorsque le véhicule transporte des passagers, le détecteur de chocs peut également commander l'allumage d'indicateurs lumineux de secours. Il peut aussi déclencher la mise en oeuvre d'un dispositif de sécurité anti-incendie.

S'ils diffèrent dans leur réalisation, les détecteurs de chocs existants fonctionnent tous selon le même principe. Un interrupteur électrique, placé dans un circuit électrique de commande du ou des systèmes de sécurité contrôlés par le détecteur, est automatiquement fermé par une masselotte mobile telle qu'une bille, lorsqu'un choc subi par le véhicule sur lequel le détecteur est embarqué entraîne une décélération du véhicule dépassant un seuil déterminé. Des détecteurs de chocs fonctionnant selon ce principe sont illustrés notamment par les documents US-A-4 873 401 et US-A-4 948 929.

Le principe de fonctionnement de ces détecteurs existants est tel que la durée du choc subi par le véhicule est sans influence sur le déclenchement des systèmes de sécurité. Cependant, l'expérience montre que les conséquences d'un choc d'amplitude relativement faible mais prolongé peuvent être aussi graves pour le véhicule et pour les personnes transportées que celles qui sont induites par un choc bref de forte amplitude. Ainsi, et uniquement à titre d'exemple, la chute d'un aéronef avec une très faible incidence sur une zone boisée peut se traduire par un choc prolongé et d'amplitude limitée, insuffisant pour être détecté par les détecteurs de chocs existants, alors qu'il justifierait le déclenchement des systèmes de sécurité de l'aéronef et notamment de l'émetteur d'une balise de détresse permettant aux secours de localiser et éventuellement d'identifier rapidement l'appareil.

L'invention a précisément pour objet un détecteur de chocs de conception originale, permettant d'assurer le déclenchement d'un ou plusieurs systèmes de sécurité d'un véhicule en tenant compte à la fois de l'amplitude et de la durée d'un choc éventuellement subi par ce dernier, de façon à pouvoir assurer ce déclenchement aussi bien en cas de choc bref et de grande amplitude qu'en cas de choc prolongé de plus faible amplitude.

Conformément à l'invention, ce résultat est obtenu au moyen d'un détecteur de chocs apte à être embarqué sur un véhicule pour déclencher automatiquement, en cas de choc, au moins un système de sécurité, ce détecteur étant caractérisé par le fait qu'il comprend :
- un capteur de chocs apte à émettre, en cas de choc, un signal impulsionnel présentant une amplitude et une durée proportionnelles, respectivement, à l'amplitude et à la durée de ce choc ;
- des moyens d'intégration, sensibles à ce signal impulsionnel, pour délivrer un signal intégré, ayant une amplitude qui augmente avec l'amplitude et avec la durée du choc ;
- des moyens de détection et de commande sensibles à ce signal intégré pour déclencher le système de sécurité lorsque l'amplitude de ce signal intégré excède un seuil prédéterminé.

Afin d'éviter que plusieurs secousses brèves et de faible amplitude ne puissent, en s'accumulant, déclencher le ou les systèmes de sécurité du véhicule, le détecteur comprend en outre, avantageusement, des moyens de remise à zéro automatique des moyens de détection et de commande, après la réception par ces derniers moyens d'un signal intégré.

Pour permettre d'adapter le détecteur à différentes applications, les moyens de détection et de commande comprennent de préférence des moyens de réglage du seuil prédéterminé.

Dans un mode de réalisation préféré de l'invention, des moyens d'amplification et des moyens de mise en forme du signal impulsionnel sont interposés entre le capteur de chocs et les moyens d'intégration. Les moyens de mise en forme du signal impulsionnel peuvent notamment comprendre un amplificateur non linéaire et des diodes d'écrétage inversées, à seuils calibrés.

Le capteur de chocs est constitué de préférence par un capteur électromagnétique, qui comprend un noyau magnétique apte à coulisser dans un corps tubulaire, à l'encontre d'un ressort taré, lorsqu'il est soumis à un choc, et un bobinage détecteur placé coaxialement autour du boîtier.

Une pastille intermédiaire, en un matériau amagnétique, est alors interposée de préférence entre le noyau magnétique et le ressort, afin d'éviter que ce dernier ne soit aimanté par le noyau magnétique et demeure en position comprimée après un choc subi par le détecteur.

Par ailleurs, le corps tubulaire est obturé à ses extrémités et comporte un orifice calibré débouchant à son extrémité adjacente au ressort taré, grâce auquel un effet d'amortissement est obtenu en cas de choc de très forte amplitude, ce qui permet d'améliorer la résistance aux chocs du capteur.

En outre, une vis de réglage permet d'appliquer le noyau magnétique contre le ressort taré.

Afin que le détecteur de chocs puisse se trouver en état de veille permanente lorsqu'il est en fonctionnement, il comprend avantageusement une source d'énergie autonome comportant une ou plusieurs batteries rechargeables, aptes à être raccordées sur un circuit d'alimentation électrique du véhicule qui en assure la charge.

L'invention a également pour objet une balise de détresse pour aéronef qui comprend à la fois un détecteur de chocs conforme à l'invention et des moyens émetteurs commandés par ce détecteur de chocs.

Dans ce cas, le détecteur de chocs forme avantageusement une partie interchangeable de la balise et les moyens émetteurs comportent de préférence une deuxième source d'énergie autonome.

Afin que l'émetteur de la balise puisse également être mis en oeuvre dans le cas où une rupture de la cellule de l'aéronef se produirait en dehors des conditions de chocs auxquelles est sensible le détecteur, la balise de détresse peut également comporter un circuit de commande des moyens émetteurs, indépendant du détecteur de chocs, apte à commander une mise en oeuvre automatique des moyens émetteurs lors de la rupture d'un câble de ce circuit de commande formant une boucle qui chemine dans l'aéronef.

Par ailleurs, la balise de détresse peut comprendre avantageusement une commande à distance, apte à être placée sur le tableau de bord de l'aéronef.

On décrira à présent, à titre d'exemple non limitatif, un mode de réalisation préféré de l'invention, en se référant aux dessins annexés, dans lesquels :
- la figure 1 est une vue de côté illustrant de façon très schématique l'implantation d'une balise de détresse comportant un détecteur de chocs conforme à l'invention, à l'intérieur d'un avion ;
- la figure 2 est une vue en perspective éclatée représentant plus en détail la balise équipant l'aéronef illustré sur la figure 1 ;
- la figure 3 est une vue en coupe longitudinale du capteur de chocs utilisé dans le détecteur de chocs équipant la balise de la figure 2 ;
- la figure 4 représente schématiquement le signal impulsionnel de tension (V) délivré par le bobinage du capteur de chocs de la figure 3, en fonction du temps (t), lorsque l'avion est soumis à un choc ;
- la figure 5 est un schéma fonctionnel du détecteur de chocs conforme à l'invention ;
- la figure 6 est une courbe illustrant la zone de réponse du détecteur de chocs selon l'invention, sur laquelle le temps (en seconde) est porté en abscisses et l'accélération (en Gal) est portée en ordonnées ;
- la figure 7 illustre plus en détail le circuit électronique associé au capteur de chocs illustré sur la figure 3, dans le détecteur de chocs de la figure 5 ; et
- la figure 8 est un schéma électrique simplifié de la balise de détresse, incorporant notamment la commande à distance implantée sur le tableau de bord de l'avion.

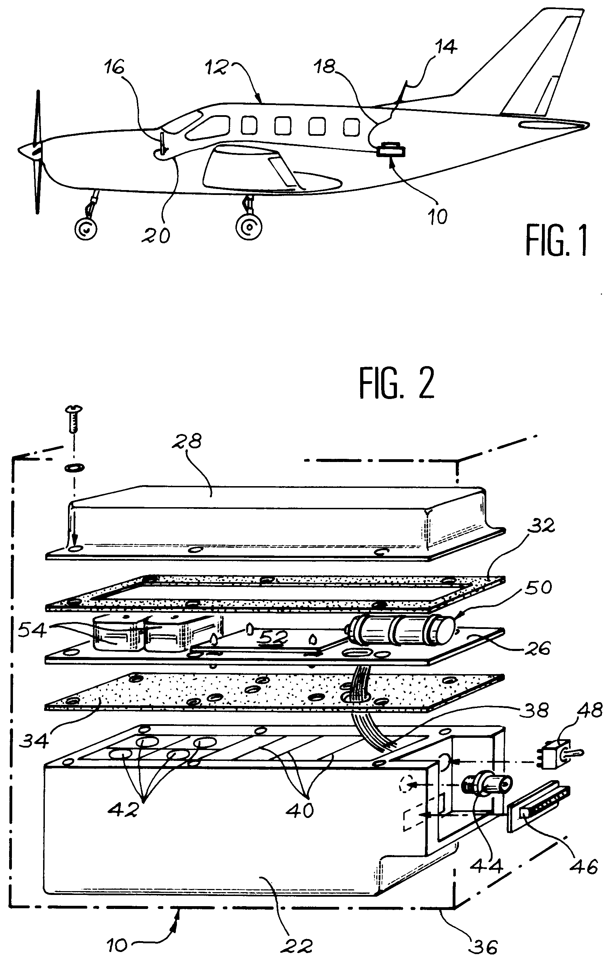

L'exemple de réalisation qui va à présent être décrit en se référant aux figures 1 à 8 concerne une balise de détresse d'avion comportant un détecteur de chocs conforme à l'invention. Il est rappelé que cette application ne doit pas être considérée comme limitative et que le détecteur de chocs conforme à l'invention peut être utilisé, en association avec un ou plusieurs systèmes de sécurité, sur tous véhicules terrestres, maritimes ou aériens, afin de déclencher automatiquement ces systèmes de sécurité lorsqu'un choc a été détecté.

Comme l'illustre très schématiquement la figure 1, le boîtier 10 de la balise de détresse est monté à l'intérieur de l'avion 12, dans un endroit accessible situé de préférence à l'arrière de l'appareil. Cet endroit peut notamment être la soute radio et comporte une porte de visite permettant d'accéder au boîtier. La fixation du boîtier 10 s'effectue sur une surface plane horizontale et dans l'axe longitudinal de l'avion. Plus précisément, le boîtier 10 est orienté, grâce à des repères extérieurs, afin que le noyau magnétique du capteur de chocs qu'il contient puisse se déplacer vers l'avant si l'avion heurte un obstacle.

En plus du boîtier 10, la balise de détresse comporte une antenne extérieure 14 et, de préférence, une commande à distance 16. L'antenne extérieure 14 est montée sur le fuselage de l'avion 12, sensiblement à la verticale du boîtier 10, en avant des gouvernes de direction, en un emplacement aussi éloigné que possible des autres antennes de radiocommunication. L'antenne 14 est reliée au boîtier 10 par un câble de liaison 18.

Par ailleurs, la commande à distance 16 est implantée sur le tableau de bord de l'avion 12, à portée de mains du pilote. Elle est également reliée au boîtier 10 par un câble 20.

Les principaux éléments du boîtier 10 de la balise de détresse sont illustrés schématiquement sur la figure 2.

Ainsi, on voit sur cette figure que le boîtier 10 comporte une partie inférieure 22 dans laquelle sont logés les moyens émetteurs, une plaque intermédiaire amovible 26 portant le détecteur de chocs, et un capot supérieur de fermeture 28. Ces différentes pièces sont fixées les unes aux autres par des vis 30 et l'étanchéité de l'ensemble est assurée par des joints 32 et 34 interposés respectivement entre le capot supérieur 28 et la plaque 26 et entre la plaque 26 et la partie inférieure 22 du boîtier. Grâce à cet agencement, il est clair que la plaque intermédiaire 26 peut être changée, si nécessaire, par un simple démontage des vis 30.

Le boîtier 10 repose sur une surface plane et horizontale de l'avion par l'intermédiaire d'une semelle (non représentée). Cette dernière peut notamment être fixée dans l'avion par des vis, alors que le boîtier est fixé sur la semelle par une sangle ignifugée (non représentée) facilitant une ouverture rapide. Le boîtier 10 peut être placé avantageusement à l'intérieur d'une enveloppe anti-feu 36 permettant d'accroître la résistance au feu de la balise lors d'un incendie à bord ou lors d'un accident.

Un faisceau de câblage 38 relie le détecteur de chocs implanté sur la plaque 26 aux moyens émetteurs logés dans la partie basse 22 du boîtier. Ces moyens émetteurs peuvent être réalisés d'une manière quelconque, de façon à émettre des signaux permettant à des sauveteurs de repérer et, de préférence, d'identifier l'avion en cas d'accident, lorsque ces moyens émetteurs ont été déclenchés par le détecteur de chocs. Ils sont implantés, par exemple, sur des circuits imprimés 40 montés dans la partie basse 22 du boîtier. Ces circuits imprimés 40 sont interchangeables lorsque le boîtier a été ouvert.

Les moyens émetteurs matérialisés par les circuits imprimés 40 disposent d'une source d'énergie autonome constituée, par exemple, par des piles au lithium 42 également logées dans la partie inférieure 22 du boîtier.

A l'une de ses extrémités, la partie inférieure 22 du boîtier 10 de la balise de détresse comporte une embase 44 permettant le branchement du câble 18 assurant le raccordement de l'antenne 14, et une embase 46 permettant le raccordement du câble 20 par lequel la commande à distance 16 est reliée au boîtier.

Un commutateur 48 est également placé sur cette extrémité de la partie 22, pour permettre à l'utilisateur de faire passer la balise d'un état d'arrêt à un état de marche manuelle ou automatique. L'état de marche manuelle permet une vérification du bon fonctionnement des moyens d'émission de la balise ou un déclenchement volontaire de ces moyens d'émission en cas de force majeure. L'état de marche automatique place la balise dans un état de veille permanent au cours d'un vol et correspond à la position dans laquelle se trouve normalement la balise durant le vol.

Le détecteur de choc implanté sur la plaque 26 se compose d'un capteur de choc 50, d'un circuit électronique 52 et d'une source d'énergie autonome constituée par exemple de deux batteries rechargeables 54 cadmium-nickel.

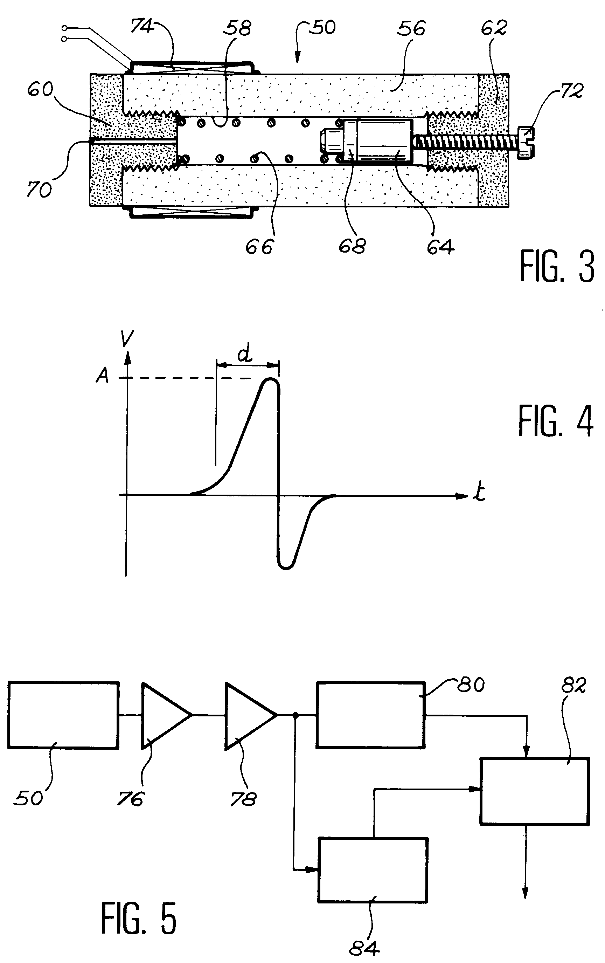

Comme l'illustre plus en détail la figure 3, le capteur de chocs 50 est un capteur électromagnétique qui comprend un corps tubulaire 56 réalisé en un matériau amagnétique présentant un coefficient de frottement particulièrement faible, tel que du polytétrafluoréthylène. Le corps tubulaire 56 délimite intérieurement un alésage 58 dont l'axe est orienté selon l'axe de l'avion ou parallèlement à cet axe lorsque le boîtier 10 est fixé dans l'avion. Cet alésage 58 est obturé à ses extrémités avant et arrière respectivement par des bouchons avant 60 et arrière 62, également réalisés en un matériau amagnétique.

Un noyau magnétique 64 est disposé de façon coulissante dans l'alésage 58. Ce noyau magnétique 64 est réalisé en un matériau magnétique présentant une grande stabilité dans le temps tel que le matériau commercialisé sous la dénomination "Bremax" par la Société Arelec.

Le noyau magnétique 64 est repoussé vers le bouchon arrière 62 par un ressort hélicoîdal taré 66, également logé dans l'alésage 58 et prenant appui par son extrémité opposée contre le bouchon avant 60. Le ressort 66 est réalisé en un matériau tel qu'un acier à ressort à faible rémanence. Il est taré de façon très précise, en fonction de la masse du noyau 64, afin que la course maximale de ce dernier soit atteinte pour une décélération bien définie, par exemple de 25 Gal environ, de l'avion.

Une pastille intermédiaire 68 est interposée entre le noyau magnétique 64 et le ressort 66, afin d'éviter que ce dernier ne soit magnétisé par le noyau 64 et ne reste bloqué dans son état comprimé après un choc. A cet effet, la pastille intermédiaire 68 est réalisée en un matériau amagnétique tel que du polytétrafluoréthylène. Elle présente en outre, sur sa face avant tournée vers le ressort 66, une partie centrale en saillie qui sert de guide au ressort 66 lors de sa compression.

Lorsque le boîtier 10 portant le capteur de chocs 50 est monté dans l'avion, il doit impérativement être orienté de telle sorte que le ressort 66 soit placé à l'avant du noyau magnétique 64, afin qu'un choc provoquant une décélération brutale de l'avion entraîne la compression du ressort par le noyau.

Le bouchon avant 60, sur lequel est en appui le ressort 66, comporte en son centre un trou calibré 70 par lequel la partie de l'alésage 58 contenant le ressort 66 communique avec l'extérieur. La section de ce trou calibré est calculée de telle sorte que l'air emmagasiné dans l'alésage 58 n'entrave pas normalement le déplacement du noyau magnétique 64 à l'encontre du ressort 66, mais qu'il amortisse ce déplacement lorsque la décélération atteint une valeur très élevée (jusqu'à environ 500 Gal), susceptible d'entraîner la destruction du capteur de chocs sous l'effet du déplacement du noyau magnétique 64.

Le bouchon arrière 62, placé du côté du noyau magnétique 64, est traversé par une vis de réglage 72 permettant d'ajuster la position de repos du noyau magnétique afin qu'il soit en permanence en appui contre l'extrémité adjacente du ressort 66, par l'intermédiaire de la pastille 68.

Enfin, le capteur de chocs 50 comporte un bobinage 74, placé autour de l'extrémité avant du corps 56. Ce bobinage 74, lorsqu'il est alimenté par un courant électrique en provenance des batteries 54, délivre un signal impulsionnel tel qu'illustré sur la figure 4 si l'avion subit un choc suffisant pour provoquer le déplacement vers l'avant du noyau magnétique 64 à l'encontre du ressort taré 66. Plus précisément, l'amplitude A et la durée d de la partie positive de ce signal impulsionnel sont proportionnelles, respectivement, à l'ampitude et à la durée du choc subi par l'avion. En effet, l'amplitude A du signal est proportionnelle à la course de déplacement du noyau magnétique 64 à l'encontre du ressort 66, elle-même proportionnelle à la décélération de l'avion, et la durée d du signal est proportionnelle à la durée du choc.

Avant de décrire plus en détail les différents éléments constitutifs du circuit électronique 52 (figure 2) qui reçoit le signal délivré par le bobinage 74, on décrira brièvement en se référant à la figure 5 les principaux étages fonctionnels de ce circuit.

Ainsi, on voit sur la figure 5 que le signal impulsionnel délivré par le bobinage du capteur de chocs 50 est d'abord amplifié par un étage amplificateur 76 à gain réglable. Le signal amplifié sortant de l'étage amplificateur 76 est ensuite injecté dans un étage de mise en forme 78 qui assure une mise en forme de ce signal en fonction de son amplitude et de sa durée. Le signal amplifié et mis en forme est ensuite intégré dans un étage d'intégration 80, qui délivre un signal intégré dont l'amplitude est représentative de la surface du signal impulsionnel amplifié et mis en forme. En d'autres termes, l'amplitude du signal d'intégration délivré par l'étage d'intégration 80 est proportionnelle à la fois à l'amplitude et à la durée du choc. Cela signifie que le signal intégré peut prendre des valeurs comparables pour un choc de faible amplitude et de grande durée, pour un choc de forte amplitude et de faible durée et pour un choc d'amplitude et de durée moyennes.

Le signal intégré sortant de l'étage d'intégration 80 est transmis à un étage de détection et de commande 82, comportant un circuit comparateur à seuil réglable, de façon à commander les moyens émetteurs implantés sur les circuits intégrés 40, lorsque le signal intégré délivré par les moyens d'intégration 80 atteint ou dépasse le seuil réglable précité.

Le circuit électronique 52 comporte en outre un circuit de remise à zéro 84 qui reçoit le signal amplifié et mis en forme sortant de l'étage de mise en forme 78, pour remettre à zéro l'étage 82 de détection et de commande, après chaque signal impulsionnel délivré par le bobinage du capteur de chocs 50. Cette remise à zéro permet d'éviter que les moyens émetteurs 40 ne soient déclenchés à la suite d'une accumulation de petits chocs successifs de courte durée.

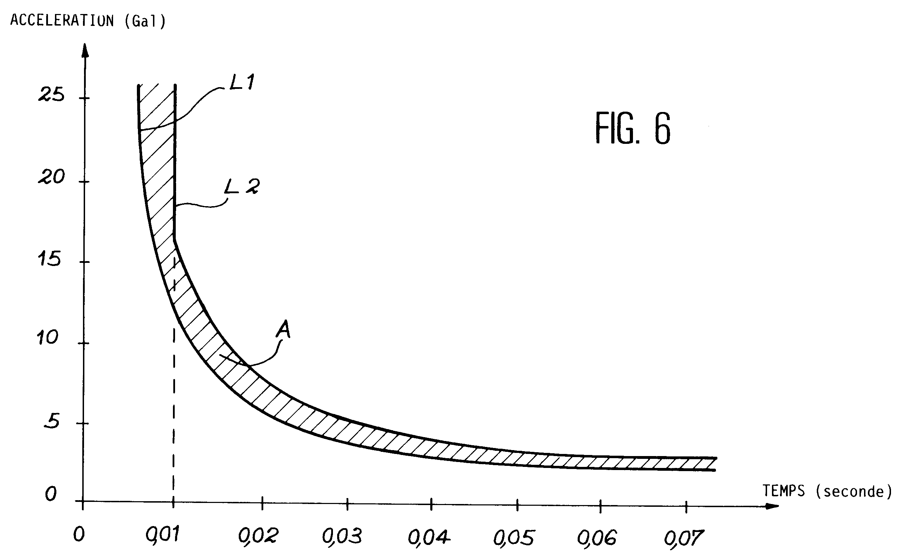

Comme l'illustre la figure 6, l'intégration, puis la mise en forme du signal impulsionnel délivré par le bobinage du capteur de chocs 50 permettent de garantir que le déclenchement des moyens émetteurs de la balise intervienne automatiquement dans une zone A située entre une première courbe L1 et une deuxième courbe L2 sur un repère dont les abscisses représentent le temps ou la durée du choc (en seconde) et les ordonnées l'accélération ou la décélération (en Gal). Plus précisément, la courbe L1 représente le seuil minimal, au-delà duquel le déclenchement peut intervenir et la courbe L2, sensiblement parallèle à la précédente, représente le seuil maximal, au-delà duquel le déclenchement doit être intervenu. Le déclenchement automatique des balises de sûreté équipant les aéronefs dans la zone A prend en compte la durée des chocs, ainsi que leur amplitude.

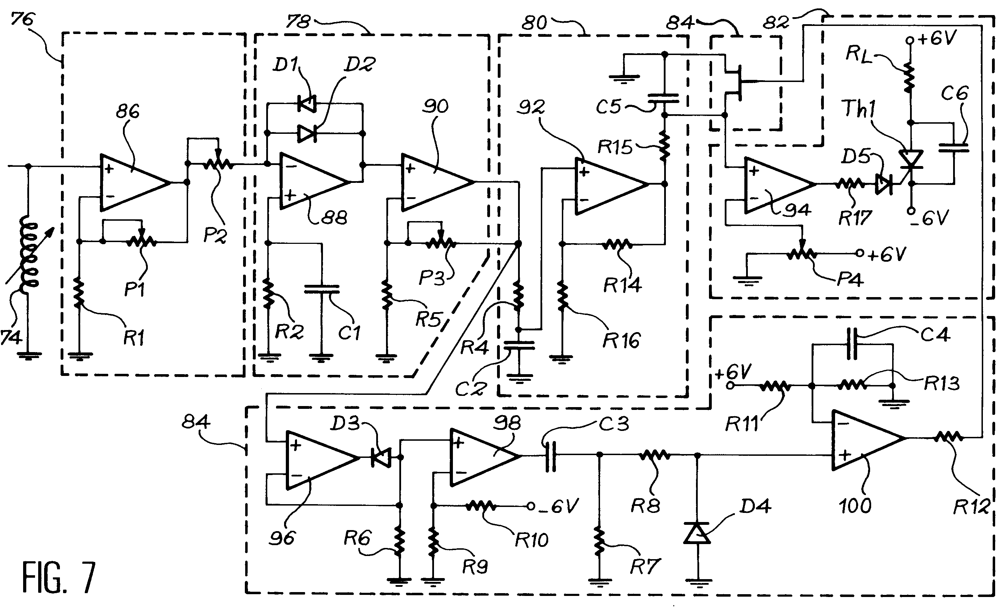

Une description plus détaillée du circuit électronique du détecteur de choc va à présent être faite en se référant à la figure 7.

Sur cette figure, on voit que la bobine 74 du capteur de chocs 50 est connectée entre la masse et la borne positive d'un amplificateur linéaire 86 constituant l'élément essentiel de l'étage amplificateur 76 sur la figure 5. L'entrée négative de l'amplificateur 86 est reliée à la masse par une résistance R1, et à la sortie de l'amplificateur par un potentiomètre P1 permettant d'en régler le gain.

La sortie de l'amplificateur linéaire 86 est reliée à l'entrée négative d'un amplificateur non linéaire 88, qui fait partie de l'étage 78 de mise en forme du signal amplifié, par l'intermédiaire d'un autre potentiomètre P2. L'entrée positive de l'amplificateur 88 est reliée à la masse par une résistance R2 et un condensateur C1 montés en parallèle. Deux diodes tête-bêche D1 et D2, également montées en parallèle, relient l'entrée négative et la sortie de l'amplificateur non linéaire 88.

Le caractère non linéaire de l'amplificateur 88 permet de mettre en forme le signal impulsionnel amplifié sortant de l'amplificateur 88 afin que ce signal évolue conformément aux courbes L1 et L2 de la figure 6. En outre, les diodes D1 et D2 sont des diodes calibrées, à seuil contrôlé qui permettent d'écréter à un niveau de tension constant le signal sortant de l'amplificateur 88.

L'étage de mise en forme 78 comprend de plus un amplificateur linéaire 90, de faible gain, dont l'entrée positive est reliée à la sortie de l'amplificateur non linéaire 88. L'entrée négative de cet amplificateur 90 est reliée à la masse par une résistance R5 et à la sortie de l'amplificateur 90 par un potentiomètre P3. Ce potentiomètre P3 permet de régler à volonté le gain de l'amplificateur 90.

Le signal amplifié et mis en forme sortant de l'amplificateur 90 pénètre ensuite dans l'étage d'intégration 80. Cet étage d'intégration comprend tout d'abord une résistance R4 et un condensateur C2 montés en série entre la sortie de l'amplificateur 90 et la masse. Le point milieu entre la résistance R4 et le condensateur C2 est relié à l'entrée positive d'un amplificateur linéaire 92 permettant d'amplifier le signal intégré ainsi obtenu, à l'intérieur de l'étage d'intégration 80. L'entrée négative de l'amplificateur 92 est reliée à la masse par une résistance R16 et à la sortie de ce même amplificateur par une résistance R14.

Le signal intégré et amplifié sortant de l'amplificateur 92 est à nouveau intégré en traversant successivement une résistance R15 et un condensateur C5 montés en série entre la sortie de l'amplificateur 92 et la masse. Le point milieu entre la résistance R15 et le condensateur C6 est relié à l'entrée positive d'un comparateur 94 de l'étage de détection et de commande 82. Un potentiomètre P4, branché entre la masse et une tension de référence par exemple de + 6 V en provenance des batteries 54, est raccordé à l'entrée négative du comparateur 94. Ce potentiomètre P4 permet de régler le seuil de tension au-delà duquel le signal intégré admis à l'entrée positive du comparateur doit déclencher la mise en oeuvre des moyens émetteurs de la balise.

A cet effet, la sortie du comparateur 94 est reliée à l'électrode de commande d'un thyristor Th1 au travers d'une résistance R17 et d'une diode D5. Le thyristor Th1 est placé en série avec les moyens d'émission dont la résistance est désignée par R_{L} sur la figure 7, et l'ensemble est soumis à une tension d'alimentation, déterminée par exemple par les bornes + 6 V et - 6 V des batteries 54. Un condensateur C6 est placée en parallèle sur le thyristor Th1.

La partie du circuit électronique du détecteur de chocs qui vient d'être décrite permet d'assurer le déclenchement des moyens émetteurs de la balise lorsque le signal intégré qui pénètre dans le comparateur 94 dépasse le seuil de tension préréglé à l'aide du potentiomètre P4. Etant donné que le niveau de ce signal dépend à la fois de l'amplitude A et de la durée d du signal impulsionnel (figure 4) émis par le bobinage 74 en cas de choc, le déclenchement des moyens émetteurs de la balise intervient aussi bien dans le cas d'un choc de forte amplitude et de courte durée que dans le cas d'un choc de relativement faible amplitude et de longue durée ou d'un choc de moyenne amplitude et de moyenne durée. Les inconvénients inhérents aux détecteurs de chocs existants, qui ne prennent en compte que l'amplitude des chocs, sont ainsi évités.

Il est à noter que les gains des amplificateurs 86, 90 et 92 sont relativement faibles, afin de n'introduire qu'un minimum de bruits de fond dans les signaux traités.

Dans le circuit électronique qui vient d'être décrit, la décharge du condensateur C6 n'intervient que lorsque la tension à l'entrée positive du comparateur 94 a pour effet de débloquer le thyristor Th1. Par conséquent, en l'absence du circuit de remise à zéro 84, le condensateur C5 pourrait se charger progressivement sous l'effet de chocs successifs de très faible amplitude et de très faible durée, ce qui pourrait conduire au déclenchement intempestif des moyens émetteurs de la balise par accumulation de charges dans le condensateur C5.

Cet inconvénient est évité par l'étage de remise à zéro 84, qui comprend un amplificateur 96 formant une diode parfaite, dont l'entrée positive est raccordée sur la sortie de l'amplificateur 90 et dont l'entrée négative est reliée à la masse par l'intermédiaire d'une résistance R6. L'entrée négative de l'amplificateur 96 est aussi reliée à la sortie de ce même amplificateur au travers d'une diode inversée D3. L'ensemble formé par l'amplificateur 96 et la diode D3 permet de ne garder que la partie utile du signal mis en forme et amplifié sortant de l'amplificateur 90.

L'entrée négative de l'amplificateur 96 est reliée à l'entrée positive d'un comparateur 98 dont l'entrée négative est reliée à la masse au travers d'une résistance R9 et à une tension de référence négative fixe, par exemple de 6 V, au travers d'une résistance R10. Si la tension à l'entrée positive du comparateur 98 est inférieure à un seuil négatif de tension prédéterminé par la valeur de la résistance R10, le comparateur 98 délivre à sa sortie un signal dont la tension est égale, par exemple, à + 6 V.

Le signal de sortie du comparateur 98 est transmis à l'entrée positive d'un deuxième comparateur 100 au travers d'un circuit dérivateur. Ce circuit dérivateur comprend en série, entre la sortie du comparateur 98 et l'entrée positive du comparateur 100, un condensateur C3 et une résistance R8. Une résistance R7 relie le point milieu entre les comparateurs C3 et R8 à la masse et une diode D4 montée en inverse relie l'entrée positive du comparateur 100 à la masse. Dans ce circuit dérivateur, l'ensemble formé par la résistance R8 et la diode D4 permet déliminer les tensions négatives du signal.

Le comparateur 100 est destiné à éliminer les distorsions du signal issu du circuit dérivateur. A cet effet, la borne négative du comparateur 100 est reliée au point milieu entre deux résistances R11 et R13 montées en série entre une source de tension fixe, par exemple de + 6 V et la masse. Un condensateur C4 est monté en parallèle sur la résistance R13, c'est-à-dire entre l'entrée négative du comparateur 100 et la masse.

Grâce aux différents composants de l'étage de remise à zéro 84 qui viennent d'être décrits, un signal de tension présentant sensiblement la forme d'un créneau est émis avec un certain retard à la sortie du comparateur 100 à chaque fois qu'un signal impulsionnel amplifié et mis en forme sort de l'amplificateur 90. Ce signal de tension sensiblement en forme de créneau est injecté, au travers d'une résistance R12, à la grille d'un transistor T1 monté en parallèle sur le condensateur C5, de façon à assurer automatiquement la décharge de ce dernier à chaque fois qu'un signal impulsionnel est émis par la bobine 74. La remise à zéro du circuit est ainsi réalisée.

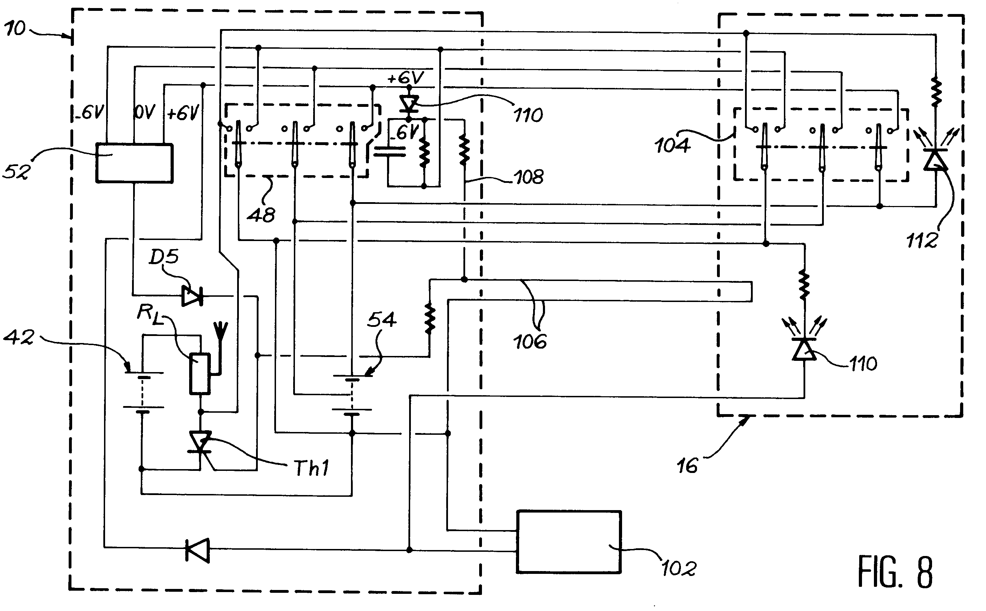

Sur la figure 8, on a représenté schématiquement les différentes liaisons électriques entre les éléments contenus dans le boîtier 10 de la balise, la commande à distance 16 et le circuit d'alimentation de l'avion, désigné par la référence 102.

Comme l'illustre la figure 8, la commande à distance 16 comporte un commutateur 104, à trois positions, monté en parallèle sur le commutateur 48 du boîtier 10, ainsi que deux voyants 110 et 112. Les commutateurs 48 et 104 sont aptes à occuper une position d'arrêt, dans laquelle les circuits électriques sont ouverts (figure 8), une position automatique et une position manuelle. Dans la position automatique, les bornes - 6 V et + 6 V et 0 du circuit électronique 52 sont reliées respectivement aux bornes opposées des deux batteries 54 montées en série et au point milieu entre ces batteries. Dans la position manuelle, le thyristor Th1 est court circuité, de telle sorte que les moyens émetteurs sont déclenchés, quel que soit l'état du détecteur de choc. Le voyant 112 est alors alimenté par les batteries 54.

Par ailleurs, on voit sur la figure 8 que le circuit d'alimentation 102 de l'avion est monté en parallèle sur les batteries 54 et l'ensemble des deux commutateurs 48 et 104, de telle sorte que les batteries sont automatiquement rechargées. Le voyant 110 est alors alimenté afin d'informer le pilote du rechargement des batteries.

On voit aussi sur la figure 8 que le circuit électrique de la balise comporte une boucle 106 au travers de laquelle l'électrode de commande du thyristor Th1 est reliée à la borne négative de l'ensemble de batteries 54. Cette boucle 106 chemine dans l'aéronef, sur la majeure partie de la longueur de celui-ci, de telle sorte que cette boucle s'ouvre automatiquement en cas de cassure du fuselage résultant par exemple d'une explosion qui n'entraînerait pas par ailleurs la mise en oeuvre des moyens émetteurs sans l'action du détecteur de chocs. Une rupture de la boucle 106 a en effet pour conséquence d'appliquer sur l'électrode de commande du thyristor Th1 la tension de référence de 6 V au travers d'un conducteur 108 dans lequel est placée une diode 110.

## Revendications

1. Détecteur de chocs apte à être embarqué sur un véhicule pour déclencher automatiquement, en cas de choc, au moins un système de sécurité, ce détecteur étant caractérisé par le fait qu'il comprend :
- un capteur de chocs (50) apte à émettre, en cas de choc, un signal impulsionnel présentant une amplitude et une durée proportionnelles, respectivement, à l'amplitude et à la durée de ce choc ;
- des moyens d'intégration (80), sensibles à ce signal impulsionnel, pour délivrer un signal intégré, ayant une amplitude qui augmente avec l'amplitude et avec la durée du choc ;
- des moyens de détection et de commande (82) sensibles à ce signal intégré pour déclencher le système de sécurité lorsque l'amplitude de ce signal intégré excède un seuil prédéterminé.

2. Détecteur de chocs selon la revendication 1, caractérisé par le fait qu'il comprend de plus des moyens (84) de remise à zéro automatique des moyens de détection et de commande (82) après la réception par ces derniers moyens d'un signal intégré.

3. Détecteur de chocs selon l'une quelconque des revendications 1 et 2, caractérisé par le fait que les moyens (82) de détection et de commande comprennent des moyens de réglage (P4) dudit seuil prédéterminé.

4. Détecteur de chocs selon l'une quelconque des revendications précédentes, caractérisé par le fait qu'il comprend de plus des moyens d'amplification (86,90) et des moyens de mise en forme (88,D1,D2) du signal impulsionnel, interposés entre le capteur de chocs (50) et les moyens d'intégration (80).

5. Détecteur de chocs selon la revendication 4, caractérisé par le fait que les moyens de mise en forme du signal impulsionnel comprennent un amplificateur non linéaire (88) et des diodes d'écrétage inversées (D1, D2), à seuils calibrés.

6. Détecteur de chocs selon l'une quelconque des revendications précédentes, caractérisé par le fait que le capteur de chocs (50) est un capteur électromagnétique, qui comprend un noyau magnétique (64) apte à coulisser dans un corps tubulaire (56), à l'encontre d'un ressort taré (66), lorsqu'il est soumis à un choc, et un bobinage détecteur (74) placé coaxialement autour du boîtier.

7. Détecteur de chocs selon la revendication 6, caractérisé par le fait qu'une pastille intermédiaire (68), en un matériau amagnétique, est interposée entre le noyau magnétique et le ressort.

8. Détecteur de chocs, selon l'une quelconque des revendications 6 et 7, caractérisé par le fait que le corps tubulaire (56) est obturé à ses extrémités et comporte un orifice calibré (70) débouchant à son extrémité adjacente au ressort taré (66).

9. Détecteur de chocs, selon l'une quelconque des revendications 6 à 8, caractérisé par le fait qu'une vis de réglage (72) permet d'appliquer le noyau magnétique (64) contre le ressort taré (66).

10. Détecteur de chocs selon l'une quelconque des revendications précédentes, caractérisé par le fait qu'il comprend de plus une source d'énergie autonome (54).

11. Détecteur de chocs selon la revendication 10, caractérisé par le fait que la source d'énergie autonome comprend au moins une batterie rechargeable (54), apte à être raccordée sur un circuit d'alimentation électrique (102) du véhicule.

12. Balise de détresse pour aéronef, caractérisée par le fait qu'elle comprend un détecteur de chocs selon l'une quelconque des revendications précédentes, et des moyens émetteurs (40) commandés par ce détecteur de chocs.

13. Balise de détresse selon la revendication 12, caractérisée par le fait que le détecteur de chocs forme une partie interchangeable (26) de la balise.

14. Balise de détresse selon l'une quelconque des revendications 12 et 13, caractérisée par le fait que les moyens émetteurs (R_{L}) comportent une deuxième source d'énergie autonome (42).

15. Balise de détresse selon l'une quelconque des revendications 12 à 14, caractérisée par le fait qu'elle comporte un circuit de commande (106,108) des moyens émetteurs (R_{L}), indépendant du détecteur de chocs (26), apte à commander une mise en oeuvre automatique des moyens émetteurs lors de la rupture d'un câble dudit circuit de commande formant une boucle (106) qui chemine dans l'aéronef.

16. Balise de détresse selon l'une quelconque des revendications 12 à 15, caractérisée par le fait qu'elle comprend une commande à distance (16), apte à être placée sur le tableau de bord de l'aéronef.
